(19) Europäisches Patentamt
European Patent Office
Office européen des brevets

(11) **EP 4 092 398 A1**

(12) **EUROPEAN PATENT APPLICATION**

(43) Date of publication:
**23.11.2022 Bulletin 2022/47**

(21) Application number: **21174886.8**

(22) Date of filing: **20.05.2021**

(51) International Patent Classification (IPC):
**G01L 5/00** (2006.01)     **G01M 13/04** (2019.01)

(52) Cooperative Patent Classification (CPC):
**G01M 13/04; G01L 5/0014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Saarinen, Kari**
  **08800 Lohja (FI)**
• **Kryniski, Krystof**
  **18139 Lidingö (SE)**

(74) Representative: **Kolster Oy Ab**
**Salmisaarenaukio 1**
**P.O. Box 204**
**00181 Helsinki (FI)**

(54) **ARRANGEMENT, METHOD, AND COMPUTER PROGRAM FOR ESTIMATING RADIAL LOADING OF ROTATING SHAFT ON ANTIFRICTION BEARING**

(57)     Arrangement, method, and computer program for estimating radial loading of rotating shaft on antifriction bearing. The method includes: providing (602) an x-axis mapping between a plurality of radial x-axis forces and a corresponding plurality of radial x-axis shaft displacements; providing (604) a y-axis mapping between a plurality of radial y-axis forces and a corresponding plurality of radial y-axis shaft displacements; obtaining (606) a first shaft displacement of a radial x-axis and a second shaft displacement of a radial y-axis; generating (608) information related to a radial x-axis loading on the antifriction bearing corresponding to the first shaft displacement based on the x-axis mapping; and generating (610) information related to a radial y-axis loading on the antifriction bearing corresponding to the second shaft displacement based on the y-axis mapping.

FIG. 6

EP 4 092 398 A1

**Description**

FIELD

Various embodiments relate to an arrangement, method, and computer program for estimating a radial loading of a rotating shaft on an antifriction bearing.

BACKGROUND

Industrial electric motors and shaft systems are critical components, whose conditions are monitored continuously or with regular inspections. The results are inadequate, because approximately at least 90% of the mechanical failures are personnel avoidable events, which prevent the equipment to even reach the wear-out stage, not to mention the expected designed lifetime. Especially the antifriction bearings in the rotating machinery are the critical components causing most of the failures as they are often subjected to excessive loadings shortening their lifetime. The antifriction bearing absorbs all kind of loads including extra loadings due to a misalignment, unbalance and soft foot caused by a careless commissioning or maintenance. A concept called precision maintenance has been introduced to ensure that the equipment is maintained to the finest precision so that variations causing defects and failures are eliminated as the maintenance work is done. However, no common tools exist to verify the quality of the maintenance work afterwards. In addition, it is difficult to find out if the changes in the operation or wearing, for example, have changed the loading conditions. To a certain extent, it is possible to use the accelerometer-based vibration analysis to detect the problems. However, it is well-known that the estimation of the load using accelerometer signals is not accurate enough.

BRIEF DESCRIPTION

According to an aspect, there is provided subject matter of independent claims. Dependent claims define some embodiments.
One or more examples of implementations are set forth in more detail in the accompanying drawings and the description of embodiments.

LIST OF DRAWINGS

Some embodiments will now be described with reference to the accompanying drawings, in which

FIG. 1 illustrates embodiments of an arrangement for estimating a radial loading of a rotating shaft on an antifriction bearing;
FIG. 2 illustrates embodiments of a rotating shaft;
FIG. 3 illustrates embodiments of the arrangement;
FIG. 4 illustrates embodiments of an x-axis mapping between a plurality of radial x-axis forces and a corresponding plurality of radial x-axis shaft displacements, and a y-axis mapping between a plurality of radial y-axis forces and a corresponding plurality of radial y-axis shaft displacements;
FIG. 5 illustrates an embodiment of an orbit plot of radial forces; and
FIG. 6 is a flow chart illustrating embodiments of a method for estimating a radial loading of a rotating shaft on an antifriction bearing.

DESCRIPTION OF EMBODIMENTS

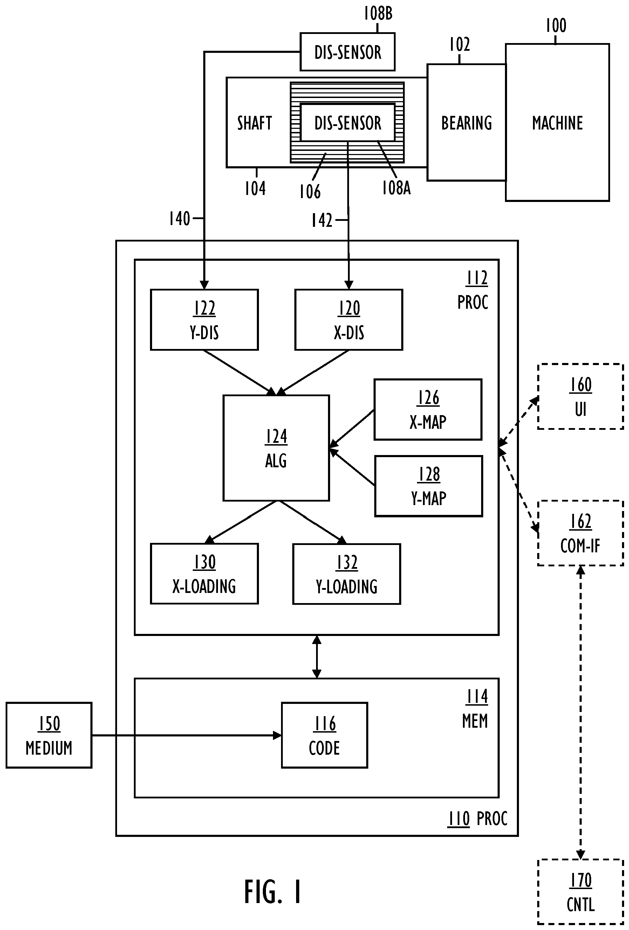

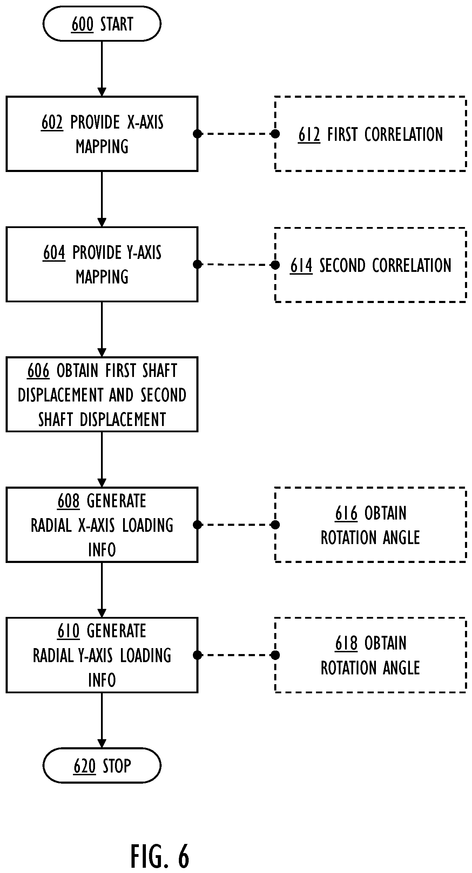

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.
Reference numbers, both in the description of the embodiments and in the claims, serve to illustrate the embodiments with reference to the drawings, without limiting it to these examples only.
The embodiments and features, if any, disclosed in the following description that do not fall under the scope of the independent claims are to be interpreted as examples useful for understanding various embodiments of the invention.
Let us study simultaneously both FIG. 1, which illustrates embodiments of an arrangement for estimating a radial loading of a rotating shaft 104 on an antifriction bearing 102, and FIG. 6, which illustrates example embodiments of a method for estimating the radial loading of the rotating shaft on the antifriction bearing.

The arrangement comprises a displacement measurement sensor 108A, 108B configured and positioned to measure a first shaft displacement 120 of a radial x-axis of the rotating shaft 104 and a second shaft displacement 122 of a radial y-axis of the rotating shaft 104. The radial x-axis is non-parallel to the radial y-axis. For example, the radial x-axis may be perpendicular to the radial y-axis.

In an embodiment, the rotating shaft 104 is a part of a rotating machine 100. The rotating machine 100 may be a rotating electric machine (such as an electric motor, electric generator, or another type of electromagnetic machine) or another type of rotating machine. However, the rotating shaft 104 may be a part of another type of a shaft system.

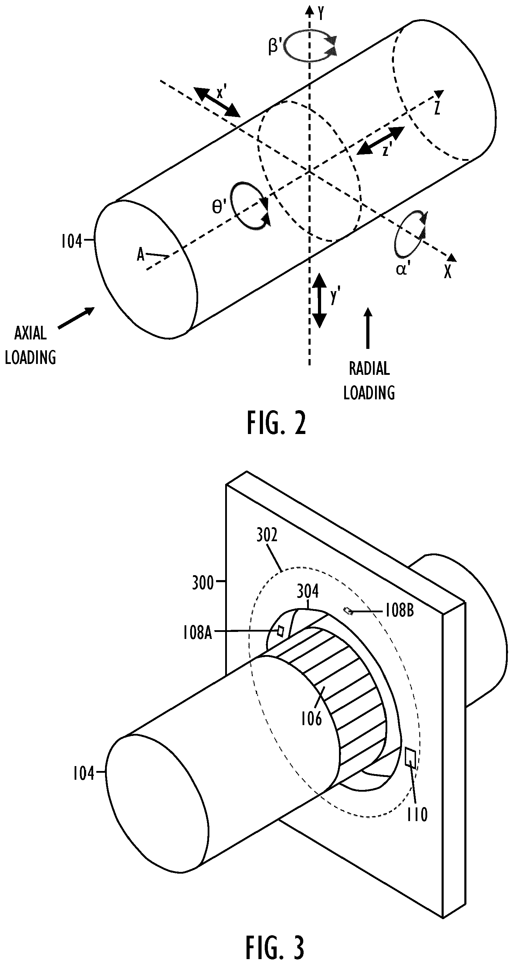

As shown in FIG. 2, the rotating shaft 104 may move in six degrees of freedom: move along X, Y and Z axes, and rotate around these axes. The translations (or movements or displacements, or rotations) of the rotating shaft 104 are marked as x' (x-axis radial displacement), y' (y-axis radial displacement) and z' (axial displacement), and $\alpha$' (rotation around x-axis), $\beta$' (rotation around y-axis), and $\theta$' (rotation around z-axis). In an embodiment, the translations x' and y' are detected by the displacement measurement sensor 108A, 108B as the shaft displacement parameters 120, 122.

In an embodiment, the rotating shaft 104 is a metal shaft of a rotor of the rotating machine 100. The rotating shaft 104 may have a driving end (D), wherefrom power is outputted, and a non-driving end (N).

In an embodiment, the rotating shaft 104 is of a cylindrical shape with a centre axis A. In FIG. 2, the Cartesian coordinate system is arranged so that the z-axis coincides with a centre axis A of the cylindrical shape, and x- and y-axes are perpendicular to z-axis and to each other.

The main function of the antifriction bearing 102 is to enable a rotational motion between the rotating shaft 104 (being part of a rotor) and a stator in the rotating electric machine 100. Naturally, the antifriction bearing 102 carries the weight of the rotor and transmits external forces in radial and axial directions. The antifriction bearing 102 comprises an inner race (also known as an inner ring), an outer race (also known as an outer ring), rolling elements, and a housing (also known as a cage). The inner race of the antifriction bearing 102 is configured and dimensioned to receive the rotating shaft 104. The inner race may be interference-fitted onto the rotating shaft 104. The outer race may be clearance-fitted to a housing of the rotating electric machine 100.

In an embodiment, the displacement measurement sensor 108A, 108B comprises a capacitive measurement sensor configured and positioned to measure a first capacitive shaft displacement of a radial x-axis of the rotating shaft 104 as the first shaft displacement 120 and a second capacitive shaft displacement of a radial y-axis of the rotating shaft 104 as the second shaft displacement 122.

ABB Finland has developed a capacitive measurement sensor as a primary motivation for accurate control of active magnetic bearing (AMB) rotors. The commercially available eddy current sensors', such as Bently Nevada 3300 XL's, major flaws are their sensitivity to rotor shaft surface's roughness, non-concentricity and inhomogeneities, which result in a reduced resolution and disturbances with the rotational frequency or its harmonics. The capacitive measurement sensor 108A, 108B disregards the impact of roughness by using four different capacitive plates, which results in an averaging effect. The capacitive measurement sensor's 108A, 108B operating principle is based on equation

$$C = \frac{\varepsilon A}{d}, \qquad\qquad (1)$$

where C is capacitance, $\varepsilon$ is permittivity, A is the area between a plate and metal surface (shaft surface) and d is the distance between the surfaces. The capacitance is inversely proportional to the distance, which affects the impedance of the resonance circuit and furthermore specifies the channel's voltage amplitude that is measured in later stages.

The capacitive measurement sensor's 108A, 108B operation is based on measuring the resonance circuit's RMS voltage. It may comprise four different capacitive plates, each of them paired with a plate connected to ground, resulting in eight different metallic plates in total. The capacitive measurement sensor 108A, 108B is capable of measuring displacement of radial x- and y-axes in a resolution of 0,16 $\mu$m. The measurement range is in -1...1 mm in each axis.

The capacitive measurement sensor 108A, 108B may measure shaft 104 displacement against a stationary frame. The capacitive measurement sensor 108A, 108B may comprise a ring-shaped frame (and circuit board, see FIG. 3) comprising capacitive measurement electrodes mounted around the rotating shaft 104. The capacitive measurement sensor 108A, 108B measures the distance between the sensor head and the surface of the shaft 104. The capacitive measurement sensor 108A, 108B may measure the capacitive shaft displacement parameter 120, 122 from an interaction with an electrically conducting part 106 of the rotating shaft 104. The electrically conducting 106 part of the rotating shaft 104 may be achieved by a special coating or material mixture, or, naturally, the whole rotating shaft 104 may be electrically conducting (as it is made of metal).

Two patents by the applicant, EP 2918964 B1 and EP 3704464 B1, and one patent application by the applicant, WO 2020/069749 A1, are incorporated herein by reference in all jurisdictions where applicable. They may be consulted in order to find a further enabling disclosure, especially for the capacitive measurement sensor 108A, 108B and its use for measuring the capacitive displacement parameters 120, 122.

The arrangement also comprises one or more processors 110 communicatively coupled 140, 142 with the displacement measurement sensor 108A, 108B.

The arrangement comprises a stored x-axis mapping 126 between a plurality of radial x-axis forces and a corresponding plurality of radial x-axis shaft displacements, and a stored y-axis mapping 128 between a plurality of radial y-axis forces and a corresponding plurality of radial y-axis shaft displacements.

In an embodiment, the one or more processors 110 comprise one or more memories 114 including computer program code 116, and one or more processors 112 configured to execute the computer program code 116 to cause performance of the arrangement.

In an embodiment, the one or more processors 110 comprise a circuitry configured to cause the performance of the arrangement.

A non-exhaustive list of implementation techniques for the processor 112 and the memory 114, or the circuitry, includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 114 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code (or software) 116 may be written by a suitable programming language (such as C, C++, assembler or machine language, for example), and the resulting executable code may be stored in the memory 114 and run by the processor 112. The computer program code 116 implements the algorithm 124 as the method illustrated in FIG. 6. The computer program code 116 may be in source code form, object code form, executable form, or in some intermediate form, but for use in the one or more processors 112 it is in the executable form. There are many ways to structure the computer program code 116: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 116 for performing a wide variety of standard operations. In addition, an operating system (such as a general-purpose operating system or a real-time operating system) may provide the computer program code 116 with system services.

An embodiment provides a computer-readable medium 150 storing the computer program code 116, which, when loaded into the one or more processors 112 and executed by one or more processors 112, causes the one or more processors 112 to perform the computer-implemented algorithm 124. The computer-readable medium 150 may comprise at least the following: any entity or device capable of carrying the computer program code 116 to the one or more processors 112, a record medium, a computer memory, a read-only memory, an electrical carrier signal, a telecommunications signal, and a software distribution medium. In some jurisdictions, depending on the legislation and the patent practice, the computer-readable medium 150 may not be the telecommunications signal. In an embodiment, the computer-readable medium 150 is a computer-readable storage medium. In an embodiment, the computer-readable medium 150 is a non-transitory computer-readable storage medium.

As shown in FIG. 3, a circuit board 302 (such as a printed circuit board), which may be positioned near the shaft 104 may comprise the one or more processors 110 and the displacement measurement sensor 108A, 108B. However, the one or more processors 110 may be located near the circuit board 302, in a same housing with the displacement measurement sensor 108A, 108B or in a separate housing, or even at a greater distance, such as in a controller, a server or a computing cloud, for example. The circuit board 302 may have been machined from a circuit board blank 300. The circuit board 302 may comprise an arched shape 304 configured and positioned adjacent to the antifriction bearing 102 and dimensioned and configured to receive the electrically conducting part 106 of the rotating shaft 104. The arched shape 304 may be implemented as a mounting hole in the circuit board 302. Such an arched shape 304 may be configured and dimensioned to receive the rotating shaft 104 with a desired fitting tolerance. Besides being a full circle as shown in FIG. 3, the arched shape 304 may comprises a partial circle of at least 90 degrees, whereby the placing of the rigid circuit board 302 adjacent to the rotating shaft 104 is simplified (as the rotating shaft 104 need not be able to be pushed through a mounting hole, for example). The circuit board 302 may also comprise two parts, which are configured to be separable so as to be placeable around the electrically conducting part 106 of the rotating shaft 104 and attachable to each other thereafter. Such a structure eases placing of the circuit board 302 adjacent to the rotating shaft 104 as well, during manufacturing or maintenance, for example. Although not illustrated in FIG. 3, the circuit board 302 is, naturally, fixed adjacent to the rotating shaft 104. This may be implemented by attaching the circuit board 302 by suitable fixing means (such as glue, screws, rack, bracket, stand, support, etc.) to the rotating electric machine 100 or to a suitable location nearby (such as floor, wall, etc.). Furthermore, the circuit board 302 may be protected by a suitable housing (made of metal, plastic, and/or composite), which may be waterproof and/or dustproof. A suitable electric energy source, such as a mains connection or a battery may be placed in the housing as well. As shown in FIG. 3, the circuit board 302 comprises one or more capacitor electrodes 108A, 108B configured and positioned adjacent to the arched shape 304. The arched shape 304 may comprise a via in the circuit board 302. The via, also known as a vertical interconnect access, is an electrical connection between layers of the circuit board 302 going through the plane of the one or more adjacent layers. The via may comprise a barrel, which is a conductive tube filling the hole, or a conductive edge adjacent to the arched shape 304. The conductivity may be achieved by electroplating or attaching a lining (such as a tube or a rivet).

The communication between the one or more processors 110 and the displacement measurement sensor 108A, 108B may be implemented with appropriate wired/wireless communication technologies and standard/proprietary protocols. The wired communication may be implemented with a suitable communication technology utilizing coaxial cable, twisted pair or fibre optic, and LAN (Local Area Network) or the Ethernet, for example. The wireless communication may be implemented with a suitable cellular communication technology such as GSM, GPRS, EGPRS, WCDMA, UMTS, 3GPP, IMT, LTE, LTE-A, 2G/3G/4G/5G, or with a suitable non-cellular communication technology such as Bluetooth, Bluetooth Low Energy, Wi-Fi, WLAN (Wireless Local Area Network).

The displacement measurement sensor 108A, 108B and the one or more processors 110 are configured to cause the execution of the method of the FIG. 6. The method forms the backbone of the algorithm 124 running in the one or more processors 110.

Now that the general structure of the arrangement and its operation environment have been described, let us study the dynamics of the algorithm 124 with reference to FIG. 6.

The method starts in 600 and ends in 620.

The operations are not strictly in chronological order in FIG. 6, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

In 602, an x-axis mapping 126 between a plurality of radial x-axis forces and a corresponding plurality of radial x-axis shaft displacements is provided.

In 604, a y-axis mapping 128 between a plurality of radial y-axis forces and a corresponding plurality of radial y-axis shaft displacements is provided.

In 606, the first shaft displacement 120 and the second shaft displacement 122 are obtained from the displacement measurement sensor 108A, 108B.

In 608, information related to a radial x-axis loading 130 on the antifriction bearing 102 is generated corresponding to the first shaft displacement 120 based on the x-axis mapping 126.

In 610, information related to a radial y-axis loading 132 on the antifriction bearing 102 is generated corresponding to the second shaft displacement 122 based on the y-axis mapping 128.

Using the described five-step sequence, the estimated radial forces may be used to detect excessive loads and to find out their reasons. It enables automated analytics, a possibility to develop precision maintenance tools and ultimately a digital twin, which may be used for improved service operations and asset management. When compared to the use of accelerometers, the load estimation is more accurate with the described use of the shaft displacements.

The loadings 130, 132 may be indicated in two ways. The arrangement may comprise a user interface 160 communicatively coupled with the one or more processors 110, and the one or more processors 110 are configured to perform the following: outputting information related to the loadings 130, 132 via the user interface 160. Alternatively, or additionally, the arrangement may comprise a data communication interface 162 communicatively coupled with the one or more processors 110, and the one or more processors 110 are configured to perform the following: communicating information related to the loadings 130, 132 via the data communication interface 162 to an external control apparatus 170, such as a local operation terminal in the vicinity of the rotating machine 100, or an remote control centre, an operations and maintenance centre, a service centre, or the like, located in another city, country, or even continent.

Theoretically, the displacement of the rotating shaft 104 related to the housing of the antifriction bearing 102 depends on the force acting on the rotating shaft 104 and the bearing stiffness. The applicant has observed in tests that with an adequate accuracy the bearing stiffness is constant. However, due to structural differences, a more accurate model may be obtained if a different constant is used for x- and y-directional stiffness, $k_{xx}$, $k_{yy}$ respectively.

Since all phenomena of the rotating machine 100 are related in one way or another to the rotation speed, it may be assumed that the process is cyclostationary, whose cyclic periodicity is the rotating speed. Fourier analysis tools are suitable for periodical processes like the cyclostationary process.

The inventors have found out that the displacement signals 120, 122 may be modelled very accurately using Fourier series, i.e., combinations of sine and cosine functions, where all the frequencies in the model are determined by one frequency $\omega_1$, and its harmonics $\omega_m = \omega_1 m$. In our case $\omega_1$ is the rotating speed. The mathematical description of the x-direction displacement signal $s_x$ 120 or the y-direction displacement signal $s_y$ 122 may be written as

$$s_x\left[n\right] = \sum_{m=1}^{M} A_m \cos(\omega_m n + \varphi_m) + \varepsilon\left[n\right], \tag{2}$$

where $n$ is the discrete time index, M is the number of harmonics in the model, $\omega_m = 2\pi v_m$, and $v_m = f_m / f_s$ is the digital frequency. Frequencies $f_m$, $f_s$ are the analog signal frequency and the sampling frequency, respectively; $\varepsilon[n]$ is the noise term.

Let us next study how the parameters of the model may be estimated using a maximum likelihood method for sinusoidal parameter estimation.

Full sinusoidal signal retrieval involves the estimation of frequencies, amplitudes, and phases of each sinusoidal component in a finite set of signal observations. The equation (2) may be modified by using the addition formula cos($a+b$) = cos($a$)cos($b$)-sin($a$)sin($b$) into the form

$$s\left[n\right] = \sum_{m=1}^{M}\left[A_m \cos(\omega_m n)\cos(\phi_m) - A_m \sin(\omega_m n)\sin(\phi_m)\right] + \varepsilon\left[n\right] \tag{3}$$

Matrix notations may be introduced

$$\mathbf{s} = \mathbf{B}\theta + \mathbf{e}, \tag{4}$$

where
$\mathbf{s} = [s[0], s[1],..., s[N\text{-}1]]^T$
$\mathbf{e} = [\varepsilon[0], \varepsilon[1],..., \varepsilon[N - 1]]^T$
$\theta = [A_1 \cos(\phi_1), A_1 \sin(\phi_1), A_2 \cos(\phi_2), A_2 \sin(\phi_2),..., A_M \cos(\phi_M), A_M \sin(\phi_M)]^T$
and

$$\mathbf{B} = \begin{bmatrix} 1 & 0 & 1 & 0 & \cdots & 1 & 0 \\ \cos(\omega_1) & -\sin(\omega_1) & \cos(\omega_2) & -\sin(\omega_2) & \cdots & \cos(\omega_M) & -\sin(\omega_M) \\ \cos(2\omega_1) & -\sin(2\omega_1) & \cos(2\omega_2) & -\sin(2\omega_2) & \cdots & \cos(2\omega_M) & -\sin(2\omega_M) \\ \vdots & \vdots & \vdots & \vdots & & \vdots & \vdots \\ \cos((N-1)\omega_1) & -\sin((N-1)\omega_1) & \cos((N-1)\omega_2) & -\sin((N-1)\omega_2) & \cdots & \cos((N-1)\omega_M) & -\sin((N-1)\omega_M) \end{bmatrix}$$

If B is known and the noise $\mathbf{e}$ is normally distributed with zero mean and covariance matrix $\sigma^2 I$, then the probability density function of $\mathbf{s}$ is

$$P(\mathbf{s}; \theta) = \frac{1}{\pi^N \sigma^{2N}} \exp\left[-\frac{1}{\sigma^2}(\mathbf{s} - \mathbf{B}\theta)^T(\mathbf{s} - \mathbf{B}\theta)\right]. \tag{5}$$

The maximum likelihood estimate (MLE) of $\theta$ is found by maximizing the equation (5), or equivalently minimizing

$$L = (\mathbf{s} - \mathbf{B}\theta)^T(\mathbf{s} - \mathbf{B}\theta). \tag{6}$$

To minimize L, it may be written as

$$L = (\mathbf{s} - \mathbf{B}\hat{\boldsymbol{\theta}})^T (\mathbf{s} - \mathbf{B}\hat{\boldsymbol{\theta}}) + (\boldsymbol{\theta} - \hat{\boldsymbol{\theta}})^T \mathbf{B}^T \mathbf{B}(\boldsymbol{\theta} - \hat{\boldsymbol{\theta}}), \qquad (7)$$

where

$$\hat{\boldsymbol{\theta}} = \left(\mathbf{B}^T \mathbf{B}\right)^{-1} \mathbf{B}^T \mathbf{s}. \qquad (8)$$

The matrix $\mathbf{B}^T\mathbf{B}$ is positive definite and therefore the second term in the equation (7) is non-negative. Because the first term in the equation (5) does not depend on $\theta$, **L** is minimized by choosing $\theta = \hat{\theta}$, i.e., the MLE is given by the equation (8). The function L is a sum of least squares and therefore $\hat{\theta}$ is called a least squares estimator, which is for the model under consideration identical to MLE.

Let us assume that also the frequencies of the sinusoids are unknown. As before, $\hat{\theta}$ will be MLE if **B** is replaced by $\hat{\mathbf{B}}$ or the unknown frequencies are replaced by their MLEs. Substituting the equation (8) into the equation (6) yields

$$\begin{aligned} L(\boldsymbol{\theta}, \boldsymbol{\omega}) = \mathbf{s}^T (\mathbf{s} - \mathbf{B}\boldsymbol{\theta}) = \\ = \mathbf{s}^T \mathbf{s} - \mathbf{s}^T \mathbf{B}\left(\mathbf{B}^T \mathbf{B}\right)^{-1} \mathbf{B}^T \mathbf{s}. \end{aligned} \qquad (9)$$

To find MLE of the frequencies, the following is maximized

$$L(\boldsymbol{\omega}) = \mathbf{s}^T \mathbf{B}\left(\mathbf{B}^T \mathbf{B}\right)^{-1} \mathbf{B}^T \mathbf{s}. \qquad (10)$$

$L(\omega)$ is a highly non-linear function of the unknown frequencies. To maximize this function, a search over M dimensional space is required.

Let us study the symmetric matrix $\mathbf{B}^T\mathbf{B}$ in the equations (8) and (10) in detail and notate $\mathbf{U} = \mathbf{B}^T\mathbf{B}$. The matrix **U** is a symmetric 2M x 2M matrix whose elements are

$$\begin{aligned} \mathbf{U}_{2k-1,2m-1} &= \sum_{n=0}^{N-1} \cos(\omega_k n)\cos(\omega_m n) \\ \mathbf{U}_{2k,2m} &= \sum_{n=0}^{N-1} \sin(\omega_k n)\sin(\omega_m n) \\ \mathbf{U}_{2k-1,2m} &= -\sum_{n=0}^{N-1} \cos(\omega_k n)\sin(\omega_m n) \\ \mathbf{U}_{2k,2m-1} &= -\sum_{n=0}^{N-1} \sin(\omega_k n)\cos(\omega_m n) \end{aligned} \qquad (12)$$

or in matrix form

$$\mathbf{U} = \begin{bmatrix} \sum_{n=0}^{N-1}\cos(\omega_1 n)\cos(\omega_1 n) & -\sum_{n=0}^{N-1}\cos(\omega_1 n)\sin(\omega_1 n) & \cdots & \sum_{n=0}^{N-1}\cos(\omega_1 n)\cos(\omega_M n) & -\sum_{n=0}^{N-1}\cos(\omega_1 n)\sin(\omega_M n) \\ -\sum_{n=0}^{N-1}\sin(\omega_1 n)\cos(\omega_1 n) & \sum_{n=0}^{N-1}\sin(\omega_1 n)\sin(\omega_1 n) & \cdots & -\sum_{n=0}^{N-1}\sin(\omega_1 n)\cos(\omega_M n) & \sum_{n=0}^{N-1}\sin(\omega_1 n)\sin(\omega_M n) \\ \sum_{n=0}^{N-1}\cos(\omega_2 n)\cos(\omega_1 n) & -\sum_{n=0}^{N-1}\cos(\omega_2 n)\sin(\omega_1 n) & \cdots & \sum_{n=0}^{N-1}\cos(\omega_2 n)\cos(\omega_M n) & -\sum_{n=0}^{N-1}\cos(\omega_2 n)\sin(\omega_M n) \\ -\sum_{n=0}^{N-1}\sin(\omega_2 n)\cos(\omega_1 n) & \sum_{n=0}^{N-1}\sin(\omega_2 n)\sin(\omega_1 n) & \cdots & -\sum_{n=0}^{N-1}\sin(\omega_2 n)\cos(\omega_M n) & \sum_{n=0}^{N-1}\sin(\omega_2 n)\sin(\omega_M n) \\ \vdots & \vdots & & \vdots & \vdots \\ \sum_{n=0}^{N-1}\cos(\omega_M n)\cos(\omega_1 n) & -\sum_{n=0}^{N-1}\cos(\omega_M n)\sin(\omega_1 n) & \cdots & \sum_{n=0}^{N-1}\cos(\omega_M n)\cos(\omega_M n) & -\sum_{n=0}^{N-1}\cos(\omega_M n)\sin(\omega_M n) \\ -\sum_{n=0}^{N-1}\sin(\omega_M n)\cos(\omega_1 n) & \sum_{n=0}^{N-1}\sin(\omega_M n)\sin(\omega_1 n) & \cdots & -\sum_{n=0}^{N-1}\sin(\omega_M n)\cos(\omega_M n) & \sum_{n=0}^{N-1}\sin(\omega_M n)\sin(\omega_M n) \end{bmatrix}$$

$$(13)$$

It turns out that the summations in **U** may be evaluated. The diagonal elements of the matrix U may be calculated using the product formulas for trigonometric functions

$$\cos(a)\cos(a) = 1/2 + 1/2\cos(a+b)$$
$$\sin(a)\sin(a) \ = 1/2 - 1/2\cos(a+b)$$

$$(14)$$

relationships between exponential and trigonometric functions (Euler's identities, i is the imaginary unit):

$$e^{i\omega} = \cos(\omega) + i\sin(\omega)\,; \qquad e^{-i\omega} = \cos(\omega) - i\sin(\omega)$$
$$\cos(\omega) = \frac{1}{2}\left(e^{i\omega} + e^{-i\omega}\right); \qquad \sin(\omega) = \frac{1}{2i}\left(e^{i\omega} - e^{-i\omega}\right)$$

$$(15)$$

$$1 - e^{iw} = e^{iw/2}\left(e^{-iw/2} - e^{iw/2}\right); \quad 1 - e^{-iw} = e^{-iw/2}\left(e^{+iw/2} - e^{-iw/2}\right),$$

$$(16)$$

and a sum of geometric series

$$\sum_{k=0}^{N-1} ar^k = \frac{a(1-r^N)}{1-r}\,; r \neq 1 \ .$$

$$(17)$$

Now the sums of multiple angle cosines and sines may be calculated:

$$\sum_{n=0}^{N-1} \cos(\omega n) = \sum_{n=0}^{N-1} \left( \frac{1}{2} \left( e^{i\omega n} + e^{-i\omega n} \right) \right) = \frac{1}{2} \frac{1 - e^{i\omega N}}{1 - e^{i\omega}} + \frac{1}{2} \frac{1 - e^{-i\omega N}}{1 - e^{-i\omega}}$$

$$= \frac{1}{2} \frac{e^{iwN/2} \left( e^{-iwN/2} - e^{iwN/2} \right)}{e^{iw/2} \left( e^{-iw/2} - e^{iw/2} \right)} + \frac{1}{2} \frac{e^{-iwN/2} \left( e^{iwN/2} - e^{-iwN/2} \right)}{e^{-iw/2} \left( e^{iw/2} - e^{-iw/2} \right)}$$

$$= \frac{1}{2} \frac{e^{iw(N-1)/2} \sin(\omega N/2)}{\sin(\omega/2)} + \frac{1}{2} \frac{e^{-iw(N-1)/2} \sin(\omega N/2)}{\sin(\omega/2)} \qquad (18)$$

$$= \frac{1}{2} \left( e^{iw(N-1)/2} + e^{-iw(N-1)/2} \right) \frac{\sin(\omega N/2)}{\sin(\omega/2)}$$

$$= \cos(\omega(N-1)/2) \frac{\sin(\omega N/2)}{\sin(\omega/2)},$$

$$\sum_{n=0}^{N-1} \sin(\omega n) = \sum_{n=0}^{N-1} \left( \frac{1}{2i} \left( e^{i\omega n} - e^{-i\omega n} \right) \right) = \frac{1}{2i} \frac{1 - e^{i\omega N}}{1 - e^{i\omega}} - \frac{1}{2i} \frac{1 - e^{-i\omega N}}{1 - e^{-i\omega}}$$

$$= \frac{1}{2i} \frac{e^{iwN/2} \left( e^{-iwN/2} - e^{iwN/2} \right)}{e^{iw/2} \left( e^{-iw/2} - e^{iw/2} \right)} - \frac{1}{2i} \frac{e^{-iwN/2} \left( e^{iwN/2} - e^{-iwN/2} \right)}{e^{-iw/2} \left( e^{iw/2} - e^{-iw/2} \right)}$$

$$= \frac{1}{2i} \frac{e^{iw(N-1)/2} \sin(\omega N/2)}{\sin(\omega/2)} - \frac{1}{2i} \frac{e^{-iw(N-1)/2} \sin(\omega N/2)}{\sin(\omega/2)} \qquad (19)$$

$$= \frac{1}{2i} \left( e^{iw(N-1)/2} - e^{-iw(N-1)/2} \right) \frac{\sin(\omega N/2)}{\sin(\omega/2)}$$

$$= \sin(\omega(N-1)/2) \frac{\sin(\omega N/2)}{\sin(\omega/2)}.$$

After some calculations, the diagonal elements are obtained

$$\mathbf{U}_{2k-1,2k-1} = \frac{N}{2} + \frac{1}{2} \frac{\cos[\omega_k(N-1)] \sin[\omega_k N]}{\sin[\omega_k]}$$

$$\mathbf{U}_{2k,2k} \quad = \frac{N}{2} - \frac{1}{2} \frac{\cos[\omega_k(N-1)] \sin[\omega_k N]}{\sin[\omega_k]}. \qquad (20)$$

The off-diagonal elements may be calculated in the same way using equations

$$\cos(a)\cos(b) = 1/2 [\cos(a-b) + \cos(a+b)]$$
$$\sin(a)\sin(b) = 1/2 [\cos(a-b) - \cos(a+b)] \qquad (21)$$
$$\sin(a)\cos(b) = 1/2 [\sin(a-b) + \sin(a+b)]$$

$$U_{2k-1,2m-1} = \frac{1}{2}\frac{cos[(\omega_k - \omega_m)(N-1)/2]\,sin[(\omega_k - \omega_m)N/2]}{sin[(\omega_k - \omega_m)/2]}$$
$$+\frac{1}{2}\frac{cos[(\omega_k + \omega_m)(N-1)/2]\,sin[(\omega_k + \omega_m)N/2]}{sin[(\omega_k + \omega_m)/2]}$$

$$U_{2k,2m} = \frac{1}{2}\frac{cos[(\omega_k - \omega_m)(N-1)/2]\,sin[(\omega_k - \omega_m)N/2]}{sin[(\omega_k - \omega_m)/2]}$$
$$-\frac{1}{2}\frac{cos[(\omega_k + \omega_m)(N-1)/2]\,sin[(\omega_k + \omega_m)N/2]}{sin[(\omega_k + \omega_m)/2]}$$

$$U_{2k-1,2m} = \frac{1}{2}\frac{sin[(\omega_k - \omega_m)(N-1)/2]\,sin[(\omega_k - \omega_m)N/2]}{sin[(\omega_k - \omega_m)/2]}$$
$$-\frac{1}{2}\frac{sin[(\omega_k + \omega_m)(N-1)/2]\,sin[(\omega_k + \omega_m)N/2]}{sin[(\omega_k + \omega_m)/2]}$$

$$U_{2k,2m-1} = -\frac{1}{2}\frac{sin[(\omega_k - \omega_m)(N-1)/2]\,sin[(\omega_k - \omega_m)N/2]}{sin[(\omega_k - \omega_m)/2]}$$
$$-\frac{1}{2}\frac{sin[(\omega_k + \omega_m)(N-1)/2]\,sin[(\omega_k + \omega_m)N/2]}{sin[(\omega_k + \omega_m)/2]}$$

$$(22)$$

The sum of squares of the amplitudes may be calculated for the frequencies effectively by the following ssumam-algorithm:

$$\mathbf{L} \leftarrow ssumam(s_d, \mathbf{f}_t, M),\qquad\qquad(11)$$

$s_d$ is the vector of measured values.
**L** is the vector of sum of squares of the amplitudes at frequencies $\mathbf{f}_t$
**M** is the number of harmonics in the sinusoidal model equation (3).

The algorithm runs as a sequence of steps 0-8.

Step 0. Initialization

$N_t$ = length($\mathbf{f}_t$)
$D$ = lengt($\mathbf{s}_d$)
$k$ = 1

Step 1. Select the frequency
$\omega_t = 2\pi\mathbf{f}_t[k]$

Step 2. Calculate (D x 2M) matrix B

$$\mathbf{B} = \begin{bmatrix} 1 & 0 & 1 & 0 & \cdots \\ \cos(\omega_t) & -\sin(\omega_t) & \cos(2\omega_t) & -\sin(2\omega_t) & \cdots \\ \cos(\omega_t 2) & -\sin(\omega_t 2) & \cos(2\omega_t 2) & -\sin(2\omega_t 2) & \cdots \quad \cdots \\ & & & & \ddots \\ \vdots & \vdots & \vdots & \vdots & \\ \cos(\omega_t(D-1)) & -\sin(\omega_t(D-1)) & \cos(2\omega_t(D-1)) & -\sin(2\omega_t(D-1)) & \cdots \end{bmatrix}$$

$$\begin{bmatrix} \cdots & 1 & 0 \\ \cdots & \cos(N_h\omega_t) & -\sin(N_h\omega_t) \\ \ddots \;\; \cdots & \cos(N_h\omega_t 2) & -\sin(N_h\omega_t 2) \\ \ddots & & \\ & \vdots & \vdots \\ \cdots & \cos(N_h\omega_t(D-1)) & -\sin(N_h\omega_t(D-1)) \end{bmatrix}$$

Step 3. Calculate (2M x 2M) matrix
Diagonal elements of U; m = 1...M

$$\mathbf{U}[2m-1, 2m-1] = \frac{D}{2} + \frac{1}{2} \frac{\cos[m\omega_t(D-1)]\sin[m\omega_t D]}{\sin[m\omega_t]}$$

$$\mathbf{U}[2m, 2m] = \frac{D}{2} - \frac{1}{2} \frac{\cos[m\omega_t(D-1)]\sin[m\omega_t D]}{\sin[m\omega_t]}$$

Off diagonal terms of U; p = 1,...,M; m = 1,...,M

$$\mathbf{U}[2p-1, 2m-1] = \frac{1}{2} \frac{\cos[(p-m)\omega_t(D-1)/2]\sin[(p-m)\omega_t D/2]}{\sin[(p-m)\omega_t/2]}$$
$$+ \frac{1}{2} \frac{\cos[(p+m)\omega_t(D-1)/2]\sin[(p+m)\omega_t D/2]}{\sin[(p+m)\omega_t/2]}$$

$$\mathbf{U}[2p, 2m] = \frac{1}{2} \frac{\cos[(p-m)\omega_t(D-1)/2]\sin[(p-m)\omega_t D/2]}{\sin[(p-m)\omega_t/2]}$$
$$- \frac{1}{2} \frac{\cos[(p+m)\omega_t(D-1)/2]\sin[(p+m)\omega_t D/2]}{\sin[(p+m)\omega_t/2]}$$

$$\mathbf{U}[2p-1, 2m] = \frac{1}{2} \frac{\sin[(p-m)\omega_t(D-1)/2]\sin[(p-m)\omega_t D/2]}{\sin[(p-m)\omega_t/2]}$$
$$- \frac{1}{2} \frac{\sin[(p+m)\omega_t(D-1)/2]\sin[(p+m)\omega_t D/2]}{\sin[(p+m)\omega_t/2]}$$

$$\mathbf{U}[2p, 2m-1] = -\frac{1}{2} \frac{\sin[(p-m)\omega_t(D-1)/2]\sin[(p-m)\omega_t D/2]}{\sin[(p-m)\omega_t/2]}$$
$$- \frac{1}{2} \frac{\sin[(p+m)\omega_t(D-1)/2]\sin[(p+m)\omega_t D/2]}{\sin[(p+m)\omega_t/2]}$$

Step 4. Calculate the Cholesky decomposition
$\mathbf{R}^T\mathbf{R} = \mathbf{U}$

Step 5. Solve θ from the equation
$\mathbf{R}^T\mathbf{R}\theta = \mathbf{B}^T\mathbf{s}_d$
utilizing the upper triangle structure of the matrix **R**

Step 6. Calculate the sum of the squares of the amplitudes

$$\mathbf{J}[k] = \sum_{m=1}^{N_h} \left( \theta[2m-1] + \theta[2m] \right)$$

Step 7. Next frequency
$k \leftarrow k + 1$
if $k \leq N_t$ go to Step 1.

Step 8. Return

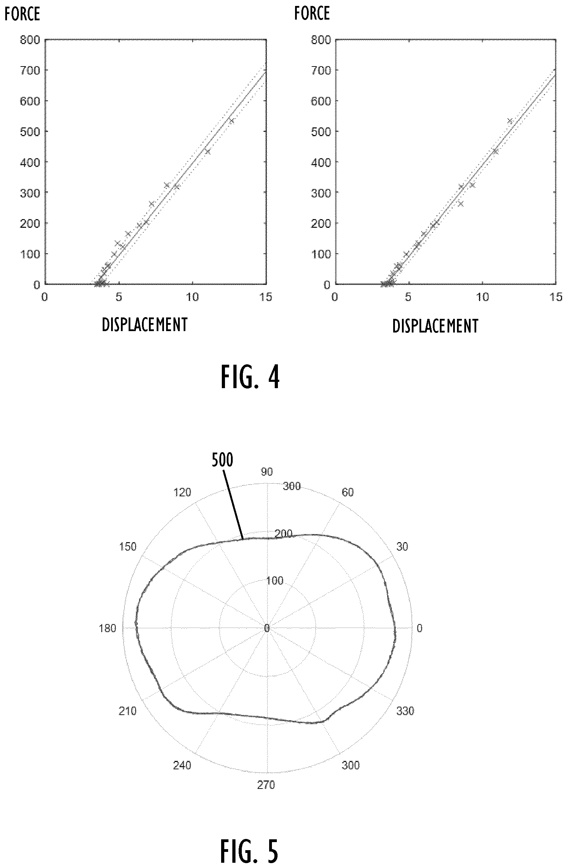

FIG. 4 shows linear correlations between unbalance forces (on the ordinates, expressed in Newtons) and displacements (on the abscissas, expressed in micrometres) for an x-axis displacement and y-axis displacement, respectively. Measurement data is marked with 'x', a linear fit representing a linear function adapted to the measurement data with a solid line, and a 95% prediction interval on both sides of the linear fit with dotted lines. The left-hand diagram illustrates the x-axis displacement with a stiffness $k_{xx}$ of 60.2 N/μm. The right-hand diagram illustrates the y-axis displacement with a stiffness $k_{yy}$ of 59.5 N/μm. Displacements in the FIG. 4 are amplitudes of the first harmonics of the Fourier series calculated for the x- and y-displacement signals. The correlation coefficients are rather good, 0.98 and 0.99.
The measurement data in FIG. 4 is obtained from experiments where simple radial forces are introduced in the form of unbalances on a test shaft under conditions corresponding to those of the rotating shaft whose radial loading is to be estimated. The unbalances are introduced by attaching weights to a disk that rotates together with the test shaft. The unbalance forces are calculated by using an equation $F = m \cdot r \cdot \omega^2$, where F is the unbalance force, m is a mass of the respective weight, r is a distance between the axis of rotation of the test shaft and a mass centre of the respective weight, and ω is an angular rotation frequency of the test shaft.
In an embodiment, the stored x-axis mapping 126 comprises a first correlation 612 between the plurality of the radial x-axis forces and the corresponding plurality of the radial x-axis shaft displacements, and the stored y-axis mapping 128 comprises a second correlation 614 between the plurality of the radial y-axis forces and the corresponding plurality of the radial y-axis shaft displacements. As shown in FIG. 4, the correlation 612, 614 may be a linear function, but it may also be another kind of function, such as a non-linear function, a second degree polynomial function, for example. Furthermore, instead of obtaining correlation functions based on experiments, they may also be obtained solely from theoretical models. Yet furthermore, besides being defined as a function, the correlation 612, 614 may be retrieved from a table or other suitable data structure mapping each value of the displacement to a corresponding value of the radial force.
FIG. 5 shows the radial forces as an orbit plot 500 of the Fourier series model for the radial forces. If the rotor angle is known, then the rotor position creating a certain radial force may be identified for a balancing purpose, for example. In an embodiment, the one or more processors 110 are configured to cause, for a radial x-axis loading and a radial y-axis loading measured at a specific time instance, to obtain 616, 618 a rotation angle of the rotating shaft 104 at the specific time instance. The rotation angle may be obtained using an optical pulse sensor, but also other suitable technologies may be used.
It must be noted that in addition to unbalance force there may be other forces in the rotating machine 100 that may have an effect on the displacement signal. These other forces may be caused by a poor alignment of the rotating shaft 104, or by dynamics of the rotating shaft 104. Therefore, the key to an accurate force estimation is a good calibration procedure taking into account also the small deviations (run out) in the surface of the rotating shaft 104.
Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

**Claims**

1. An arrangement for estimating a radial loading of a rotating shaft (104) on an antifriction bearing (102), comprising:

   a displacement measurement sensor (108A, 108B) configured and positioned to measure a first shaft displacement (120) of a radial x-axis of the rotating shaft (104) and a second shaft displacement (122) of a radial y-axis of the rotating shaft (104);
   a stored x-axis mapping (126) between a plurality of radial x-axis forces and a corresponding plurality of radial x-axis shaft displacements;
   a stored y-axis mapping (128) between a plurality of radial y-axis forces and a corresponding plurality of radial y-axis shaft displacements;
one or more processors (110), communicatively coupled (140, 142) with the displacement measurement sensor (108A, 108B), and configured to cause performance of at least the following:

> obtaining (606) the first shaft displacement (120) and the second shaft displacement (122) from the displacement measurement sensor (108A, 108B);
> generating (608) information related to a radial x-axis loading (130) on the antifriction bearing (102) corresponding to the first shaft displacement (120) based on the stored x-axis mapping (126); and
> generating (610) information related to a radial y-axis loading (132) on the antifriction bearing (102) corresponding to the second shaft displacement (122) based on the stored y-axis mapping (128).

2. The arrangement of claim 1, wherein the stored x-axis mapping (126) comprises a first correlation (612) between the plurality of the radial x-axis forces and the corresponding plurality of the radial x-axis shaft displacements, and the stored y-axis mapping (128) comprises a second correlation (614) between the plurality of the radial y-axis forces and the corresponding plurality of the radial y-axis shaft displacements.

3. The arrangement of any preceding claim, wherein the one or more processors (110) are configured to cause performance of at least the following:
for a radial x-axis loading and a radial y-axis loading measured at a specific time instance, obtaining (616, 618) a rotation angle of the rotating shaft (104) at the specific time instance.

4. The arrangement of any preceding claim, wherein the displacement measurement sensor (108A, 108B) comprises a capacitive measurement sensor configured and positioned to measure a first capacitive shaft displacement of a radial x-axis of the rotating shaft (104) as the first shaft displacement (120) and a second capacitive shaft displacement of a radial y-axis of the rotating shaft (104) as the second shaft displacement (122).

5. The arrangement of any preceding claim, wherein the one or more processors (110) comprise:

> one or more memories (114) including computer program code (116); and
> one or more processors (112) configured to execute the computer program code (116) to cause performance of the arrangement.

6. A method for estimating a radial loading of a rotating shaft on an antifriction bearing, comprising:

> providing (602) an x-axis mapping between a plurality of radial x-axis forces and a corresponding plurality of radial x-axis shaft displacements;
> providing (604) a y-axis mapping between a plurality of radial y-axis forces and a corresponding plurality of radial y-axis shaft displacements;
> obtaining (606) a first shaft displacement of a radial x-axis of the rotating shaft and a second shaft displacement of a radial y-axis of the rotating shaft;
> generating (608) information related to a radial x-axis loading on the antifriction bearing corresponding to the first shaft displacement based on the x-axis mapping; and
> generating (610) information related to a radial y-axis loading on the antifriction bearing corresponding to the second shaft displacement based on the y-axis mapping.

7. The method of claim 6, wherein the x-axis mapping comprises a first correlation (612) between the plurality of the radial x-axis forces and the corresponding plurality of the radial x-axis shaft displacements, and the y-axis mapping comprises a second correlation (614) between the plurality of the radial y-axis forces and the corresponding plurality of the radial y-axis shaft displacements.

8. The method of claim 6 or 7, further comprising:
for a radial x-axis loading and a radial y-axis loading measured at a specific time instance, obtaining (616, 618) a rotation angle of the rotating shaft at the specific time instance.

9. A computer-readable medium (150) comprising computer program code (116), which, when executed by one or more processors (110), causes performance of a method for estimating a radial loading of a rotating shaft on an antifriction bearing, comprising:

providing (602) an x-axis mapping between a plurality of radial x-axis forces and a corresponding plurality of radial x-axis shaft displacements;

providing (604) a y-axis mapping between a plurality of radial y-axis forces and a corresponding plurality of radial y-axis shaft displacements;

obtaining (606) a first shaft displacement of a radial x-axis of the rotating shaft and a second shaft displacement of a radial y-axis of the rotating shaft;

generating (608) information related to a radial x-axis loading on the antifriction bearing corresponding to the first shaft displacement based on the x-axis mapping; and

generating (610) information related to a radial y-axis loading on the antifriction bearing corresponding to the second shaft displacement based on the y-axis mapping.

10. The computer-readable medium of claim 9, wherein the x-axis mapping comprises a first correlation (612) between the plurality of the radial x-axis forces and the corresponding plurality of the radial x-axis shaft displacements, and the y-axis mapping comprises a second correlation (614) between the plurality of the radial y-axis forces and the corresponding plurality of the radial y-axis shaft displacements.

11. The computer-readable medium of claim 9 or 10, wherein the method further comprises:
for a radial x-axis loading and a radial y-axis loading measured at a specific time instance, obtaining (616, 618) a rotation angle of the rotating shaft at the specific time instance.

FIG. 1

FIG. 2

FIG. 3

FORCE

FORCE

DISPLACEMENT

DISPLACEMENT

## FIG. 4

500

## FIG. 5

FIG. 6

Europäisches
Patentamt

European
Patent Office

Office européen
des brevets

**EUROPEAN SEARCH REPORT**

Application Number

EP 21 17 4886

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X,D | EP 3 704 464 B1 (ABB SCHWEIZ AG [CH]) 31 March 2021 (2021-03-31) * abstract; claims 1-14; figures 1-11 * * paragraphs [0013], [0026] - [0034], [0057] * ----- | 1-11 | INV. G01L5/00 G01M13/04 |
| | | | TECHNICAL FIELDS SEARCHED      (IPC) |
| | | | G01L G01M |

The present search report has been drawn up for all claims

| Place of search | Date of completion of the search | Examiner |
|---|---|---|
| The Hague | 29 October 2021 | Moscelli, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 4886

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2021

| Patent document cited in search report | | Publication date | Patent family member(s) | | Publication date |
|---|---|---|---|---|---|
| EP 3704464 | B1 | 31-03-2021 | CN | 111448447 A | 24-07-2020 |
| | | | EP | 3704464 A1 | 09-09-2020 |
| | | | US | 2020256763 A1 | 13-08-2020 |
| | | | WO | 2019086123 A1 | 09-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2918964 B1
- EP 3704464 B1
- WO 2020069749 A1